(19) Europäisches Patentamt
European Patent Office
Office européen des brevets

(11) **EP 4 403 863 A1**

(12) **EUROPEAN PATENT APPLICATION**
published in accordance with Art. 153(4) EPC

(43) Date of publication:
**24.07.2024 Bulletin 2024/30**

(21) Application number: **22885567.2**

(22) Date of filing: **28.09.2022**

(51) International Patent Classification (IPC):
**F28F 1/00** (2006.01)     **F28F 21/08** (2006.01)
**F24F 13/00** (2006.01)

(52) Cooperative Patent Classification (CPC):
**F24F 13/00; F28F 1/00; F28F 21/08**

(86) International application number:
**PCT/CN2022/122138**

(87) International publication number:
**WO 2023/071682 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.10.2021 CN 202122614353 U**

(71) Applicant: **Zhejiang Dunan Artificial Environment
Co., Ltd.
Shaoxing
Zhejiang 311835 (CN)**

(72) Inventors:
• **WANG, Wenjie
Shaoxing, Zhejiang 311835 (CN)**
• **LANG, Zhuang
Shaoxing, Zhejiang 311835 (CN)**
• **FANG, Yi
Shaoxing, Zhejiang 311835 (CN)**

(74) Representative: **Viering, Jentschura & Partner
mbB
Patent- und Rechtsanwälte
Am Brauhaus 8
01099 Dresden (DE)**

(54) **BENT PIPE FOR AIR CONDITIONING SYSTEM, AND AIR CONDITIONING SYSTEM**

(57) A bent pipe (100) for an air conditioning system is provided. An outer diameter of the bent pipe (100) is defined as $D$, and a thickness of a wall of the bent pipe (100) is defined as $T$; a bending radius of a bending part of the bent pipe (100) is defined as $R$. The outer diameter $D$ of the bent pipe (100), the thickness $T$ of the wall of the bent pipe (100) and the bending radius $R$ of the bending part of the bent pipe (100) satisfy the following formula: $T/D \geq 0.03$; and $R/D \geq 1.2$.

FIG. 1

EP 4 403 863 A1

Description

CROSS-REFERENCE TO RELATED APPLICATION

This application claims priority to Chinese patent application No. 20212261 4353.9, filed on October 26, 2021, and titled "BENT PIPE FOR AIR CONDITIONIN G SYSTEM". The content of the above identified application is hereby incorporated h erein in their entireties by reference.

TECHNICAL FIELD

The present invention relates to the field of refrigeration technology, and in particular, to a bent pipe for an air conditioning system and an air conditioning system.

BACKGROUND

A bent pipe is commonly employed in an air conditioning system to guide a circulation of refrigerant and enhance a flow path structure to facilitate complete heat exchange.

When transforming a raw material pipe into a bent pipe, it is crucial to consider both the flatness ratio and the smoothness of the resulting bent pipe to avoid the formation of wrinkles or pits. Simply enhancing the process steps may not be sufficient to eliminate these imperfections and ensure the desired flatness and smoothness of the bent pipe.

SUMMARY

According to various embodiments of the present invention, a bent pipe for an air conditioning system is provided.

The present invention provides a bent pipe for an air conditioning system, an outer diameter of the bent pipe is defined as $D$, and a thickness of a wall of the bent pipe is defined as $T$; a bending radius of a bending part of the bent pipe is defined as $R$. The outer diameter $D$ of the bent pipe, the thickness $T$ of the wall of the bent pipe and the bending radius $R$ of the bending part of the bent pipe satisfy the following formula: $T/D \geq 0.03$; and $R/D \geq 1.2$.

In some embodiments, a ratio of the thickness $T$ of the wall of the bent pipe to the outer diameter $D$ of the bent pipe is in a range of 0.03 to 0.15.

In some embodiments, a ratio of the bending radius $R$ of the bending part of the bent pipe to the outer diameter $D$ of the bent pipe is in a range of 1.2 to 4.

In some embodiments, the bending radius $R$ of the bending part of the bent pipe is in a range of 2 cm to 10 cm.

In some embodiments, the bending radius $R$ of the bending part of the bent pipe is in a range of 5 mm to 120 mm.

In some embodiments, the thickness $T$ of the wall of the bent pipe is in a range of 0.2 mm to 2.5 mm.

In some embodiments, the thickness $T$ of the wall of the bent pipe is in a range of 0.4 mm to 2 mm.

In some embodiments, the outer diameter $D$ of the bent pipe is in a range of 5 mm to 60 mm.

In some embodiments, a material of the bent pipe is stainless.

In some embodiments, the bent pipe includes a bending section and a diameter expanding section, wherein the diameter expanding sections are arranged at two ends of the bending section, respectively; and an outer diameter of the diameter expanding section is less than or equal to 1.6 times the outer diameter $D$ of the bent pipe.

In some embodiments, the bent pipe further includes a connecting pipe section, the diameter expanding section is arranged between the bending section and the connecting pipe section.

In some embodiments, an included angle between the diameter expanding section and an axis of the connecting pipe section is less than or equal to 70 degrees.

The present invention further provides an air conditioning system including the above bent pipe for the air conditioning system is provided.

Details of one or more embodiments of this application are presented in the attached drawings and descriptions below. And other features, purposes and advantages of this application will become apparent from the description, drawings and claims.

BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.

FIG. 1 is a schematic view of a bent pipe for an air conditioning system according to one or more embodiments.
FIG. 2 is a schematic view of a bent pipe for an air conditioning system according to one or more embodiments.
FIG. 3 is a schematic view of an air conditioning system according to one or more embodiments.

Reference signs are as follows: 100 represents a bent pipe; 10 represents a bending section; 20 represents a diameter expanding section; 30 represents a connecting pipe section; and 200 represents an air conditioning system.

## DETAILED DESCRIPTION

The technical scheme in the embodiment of this application will be described clearly and completely with the attached drawings. Obviously, the described embodiment is only a part of the embodiment of this application, not the whole embodiment. Based on the embodiments in this application, all other embodiments obtained by ordinary technicians in this field without creative work belong to the protection scope of this application.

It should be noted that when a component is considered to be "mounted" on another component, it can be directly on the other component or there can be a component in the middle. When a component is considered to be "set on" another component, it can be directly set on another component or there may be intervening components at the same time. When a component is considered to be "fixed" to another component, it can be directly fixed to another component or there may be intervening components at the same time.

Unless otherwise defined, all technical and scientific terms used herein have the same meaning as commonly understood by those skilled in the technical field of this application. The terminology used herein in the specification of this application is only for the purpose of describing specific embodiments, and is not intended to limit this application. As used herein, the term "or/and" includes any and all combinations of one or more related listed items.

A bent pipe is usually used in an air conditioning system, an end of the bent pipe is connected with a copper pipe group of the air conditioning system, which is used to guide a circulation of refrigerant and optimize a flow path structure to achieve a purpose of full heat exchange. When transforming a raw material pipe into a bent pipe, it is crucial to consider both the flatness ratio and the smoothness of the resulting bent pipe to avoid the formation of wrinkles or pits. Simply enhancing the process steps may not be sufficient to eliminate these imperfections and ensure the desired flatness and smoothness of the bent pipe.

When a raw material pipe undergoes bending, it experiences deformation due to the bending moment. As the tensile stress increases during the bending process, a wall of the bent pipe may become thinner, potentially leading to formation of micro-cracks in severe cases. Conversely, a compressive stress at the bending position can cause the wall of the bent pipe to thicken, and in extreme situations, internal wrinkles may occur. The presence of wrinkles or pits on the inner wall of the bent pipe can significantly disrupt flow of refrigerant within the pipe, consequently impacting efficiency of cooling and heating in the air conditioning system. Moreover, an excessively high flatness ratio of the bent pipe can reduce the cross-sectional area, affecting refrigerant circulation and, subsequently, the cooling and heating efficiency of the air conditioning system. Furthermore, the excessively high flatness ratio can compromise the strength of the bent pipe, making it more prone to cracking or breakage during operation, thereby diminishing safety performance of the air conditioning system.

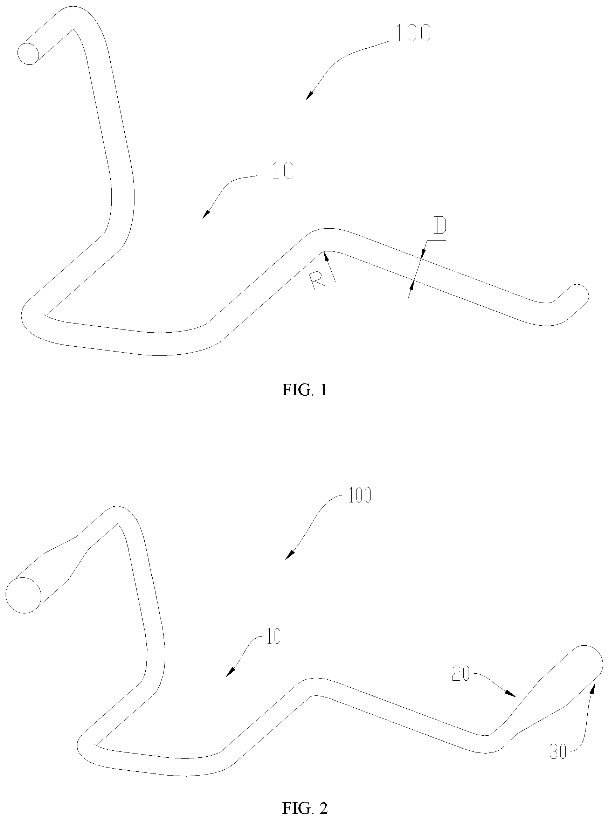

Referring to FIG. 1 to FIG. 3, the present invention provides a bent pipe 100 for an air conditioning system, an outer diameter of the bent pipe 100 is defined as D, and a thickness of a wall of the bent pipe 100 is defined as T. In other words, an outer diameter of a raw material pipe used for processing the bent pipe 100 is defined as D and a thickness of a wall of a raw material pipe is defined as T, and the bent pipe 100 can be formed the raw material pipe by bending. And a bending radius of a bending part of the bent pipe is defined as R. The outer diameter $D$ of the bent pipe, the thickness $T$ of the wall of the bent pipe and the bending radius $R$ of the bending part of the bent pipe satisfy the following formula: $T/D \geq 0.03$; and $R/D \geq 1.2$.

Referring to FIG. 1 to FIG. 3, a bent pipe 100 for an air conditioning system is provided. An outer diameter of the bent pipe 100 is defined as $D$, and a thickness of a wall of the bent pipe 100 is defined as $T$. In other words, an outer diameter of a raw material pipe used for processing the bent pipe 100 is defined as $D$ and a thickness of a wall of a raw material pipe is defined as $T$, and the bent pipe 100 can be formed the raw material pipe by bending. And a bending radius of a bending part of the bent pipe is defined as $R$. The outer diameter $D$ of the bent pipe, the thickness $T$ of the wall of the bent pipe and the bending radius $R$ of the bending part of the bent pipe satisfy the following formula: $T/D \geq 0.03$; and $R/D \geq 1.3$.

In the present invention, by improving a ratio of the thickness $T$ of the wall of the bent pipe 100 to the outer diameter $D$ of the bent pipe 100 and combining with a ratio of the bending radius $R$ of the bent pipe 100 to the outer diameter $D$ of the bent pipe 100, a flatness ratio of the bent pipe 100 formed by bending is ensured not to exceed 15%, so that the bent pipe 100 is prevented from being torn or broken, wrinkles or pits are effectively prevented at a bending part of the bent pipe 100, and a forming quality and an aesthetics of the bent pipe 100 are improved. The present invention fundamentally define that the thickness of the wall of the bent pipe 100 and the outer diameter of the bent pipe 100 by star from the raw material pipe. By utilizing the raw material pipe provided by the present invention, it can effectively reduce the occurrence of wrinkles and pits during a bending process of transforming the raw material pipe into the bent pipe 100. Additionally, a requirement that a flatness ratio of the bent pipe 100 should not exceed 15% is considered, which helps in simplifying a processing technology involved.

A ratio of the thickness $T$ of the wall of the bent pipe 100 to the outer diameter $D$ of the bent pipe 100 is maintained within the range of 0.03 to 0.15. In this range, the ratio of the thickness $T$ of the wall of the bent pipe 100 to the outer diameter $D$ of the bent pipe 100 is moderate, so that the raw material pipe is less prone to wrinkling during the bending process while also preventing the flatness ratio from exceeding 15%. As a result, the bent pipe 100 formed demonstrates a high pass rate, indicating that it meets the criteria of both no wrinkling and a flatness ratio below 15%.

In addition, the flatness ratio of the bent pipe 100 is defined as *A,* the flatness ratio *A* of the bent pipe 100 is calculated as follows formula:

$$A = \{1 - \frac{R}{R+\frac{D}{2}}\} \times 100\%$$

Wherein, *A* is the flatness ratio of a pipe wall at an outer busbar of a bending part of the bent pipe 100 (%);

*D* is the outer diameter of the bent pipe 100 (mm); and *R* is the bending radius (mm) at a bending part of the bent pipe 100.

Therefore, in order to meet a requirement of the flatness ratio of the bent pipe 100, a ratio of *R/D* can be selected, and optionally, the bending radius *R* of the bending part of the bent pipe 100 to the outer diameter *D* of the bent pipe 100 is in a range of 1.2 to 4. Within this range, the ratio of the bending radius *R* at the bending part of the bent pipe 100 to the outer diameter *D* of the bent pipe 100 is moderate, so that the raw material pipe is less prone to wrinkling during the bending process while also preventing the flatness ratio from exceeding 15%. As a result, the bent pipe 100 formed demonstrates a high pass rate.

In an embodiment, the bending radius *R* of the bending part of the bent pipe is in a range of 2 cm to 10 cm. If the bending radius of the bent pipe 100 is too great, not only a lot of materials are used, but also the bending part formed by the bent pipe 100 occupies a large space, which leads to a difficulty in assembling the bent pipe 100. However, if the bending radius of the bent pipe 100 is too small, the wall of the bending part is thinned due to partial elongation, diminishing its overall strength, while an inner wall of the bending part is compressed, it is prone to wrinkling. Therefore, considering these scenarios, the bending radius *R* of the bent pipe 100 is designed in the range of 5 mm to 120 mm, it is beneficial to improve a molding quality of the bent pipe 100. Of course, in other embodiments, the bending radius *R* can also be other values, and the bending radius *R* can be adjusted according to different pipe size requirements, which is not limited to the above-mentioned range values, as long as the ratio of the bending radius *R* of the bending part of the bent pipe 100 to the outer diameter *D* of the bent pipe 100 is greater than 1.2.

Furthermore, the bending radius *R* of the bending part of the bent pipe 100 is in a range of 8 mm to 100 mm, and the forming quality of the bent pipe 100 is the best. Of course, in other embodiments, the bending radius *R* can also be other values.

The difficulty of bending the raw material pipe depends not only on the bending radius, but also on the thickness of the wall. The smaller the thickness of the wall of the raw material pipe, the more difficult it is to process and easier it is to wrinkle. Therefore, it is necessary to find a reasonable range of the thickness of the wall of the raw material pipe to ensure that the bent pipe 100 formed by bending meets the requirements. Therefore, the thickness *T* of the wall of the bent pipe 100 can be designed in a range of 0.2 mm to 2.5 mm. Within this range, the difficulty of bending the raw material pipe is reduced, and the bent pipe 100 meets the strength requirements. Of course, in other embodiments, the range of the thickness *T* of the wall of the bent pipe 100 is not limited to the above, and it is necessary to select an appropriate wall thickness value in combination with the application scenario and the outer diameter of the raw material pipe, for example, the range of the thickness *T* of the wall of the bent pipe 100 is in range of 0.4 mm to 3 mm.

Because the bent pipe 100 is used in the air conditioning system, the bent pipe 100 needs to be able to withstand a certain pressure, exhibit adequate strength, and also consider the challenges associated with the bending process. Therefore, in some embodiments, the thickness *T* of the wall of the raw material pipe is in a range of 0.4 mm to 2 mm Of course, in other embodiments, the thickness value of the wall of the raw material pipe is not limited to the above-mentioned range, for example, the thickness of the wall of the raw material pipe can also be 0.7 mm. Therefore, the range of the thickness *T* of the wall of the bent pipe 100 can be selected from 0.4 mm to 2 mm.

The ratios of the thickness *T* of the wall of the bent pipe 100 to the outer diameter *D* of the bent pipe 100 and the bending radius *R* of the bending part of the bent pipe 100 to the outer diameter *D* of the bent pipe 100 which affect the forming quality of the bent pipe 100, are all related to the outer diameter *D* of the raw material pipe. A pipe size of the bent pipe 100 usually depends on refrigeration efficiency requirements of the air conditioning system. In one embodiment, the outer diameter *D* of the raw material pipe is in a range of 5 mm to 60 mm. Of course, in other embodiments, the range of the outer diameter of the raw material pipe is not limited to the above, for example, the range of the outer diameter *D of* the raw material pipe can also be in a range of 3 mm to 80 mm.

In some embodiments, the outer diameter *D* of the bent pipe 100 is in a range of 5 mm to 60 mm. Of course, in other embodiments, the range of the outer diameter of the bent pipe 100 is not limited to the above, for example, the range of the outer diameter *D of* the bent pipe 100 can also be in a range of 3 mm to 80 mm.

In some embodiments, the outer diameter *D* of the bent pipe 100 is 15 mm. This arrangement not only meets the requirement of a refrigeration power of the air conditioning system, but also takes into account a selection of the thickness of the wall of the raw material pipe and the bending radius of the raw material pipe, thereby providing the bent pipe 100 in this embodiment. Of course, in other embodiments, the outer diameter of the raw material pipe is not limited to the above-mentioned value, for example, the outer diameter of the raw material pipe may be 18 mm.

Furthermore, the bent pipe 100 is made of stainless steel. Compared with copper pipe, a stainless steel pipe has smaller cost, corrosion resistance, impact resistance, vibration resistance, great temperature resistance and low temperature resistance, and also has greater heat transfer coefficient, which is beneficial to improve a heat transfer efficiency in air conditioning system and prolong a service life of the bent pipe 100.

Referring to FIG. 2, the bent pipe 100 includes a bending section 10 and a diameter expanding section 20, the diameter expanding sections 20 are arranged at two ends of the bending section 10, respectively. So as to ensure that when the bent pipe 100 is connected with external component, an external connecting pipe of the external component can be in interference fit with the diameter expanding sections 20 and improve a sealing performance of position of connection. And an outer diameter of the diameter expanding section 20 is less than or equal to 1.6 times the outer diameter $D$ of the bent pipe 100, so as to prevent the outer diameter of the diameter expanding section 20 from being too large and ensure that the diameter expanding section 20 can be tightly connected with the external connecting pipe. And the diameter expanding section 20 refers to a process of reducing a size of both ends of the bent pipe 100, so that the size of both ends of the bent pipe 100 are gradually expanded to form the diameter expanding section 20. The bending section 10 refers to a part of the bent pipe 100 used for bending processing.

In addition, the bent pipe 100 further includes a connecting pipe section 30, the diameter expanding section 20 is arranged between the bending section 10 and the connecting pipe section 30, so that the connecting pipe section 30 is connected with the external connecting pipe, that is, the connecting pipe section 30 is sleeved outside the external connecting pipe, which improves a connection stability of the bent pipe 100 and the external connecting pipe. Combined with the diameter expanding section 20, stability and a tightness of a connection between the external connecting pipe and the diameter expanding section 100 are improved.

In some embodiments, an included angle between the diameter expanding section 20 and an axis of the connecting pipe section 30 is less than or equal to 70 degrees, so that the diameter expanding section 20 can be formed with moderate expansion and the outer diameter of the diameter expanding section 20 can be avoided from being too large.

In the present invention, the relationship among the wall thickness, the outer diameter and the bending radius of the bent pipe 100 is fundamentally defined by starting from the raw material pipe. By adopting the raw material pipe provided by the present invention, a probability of wrinkles and pits generated can be effectively reduced when the raw material pipe is processed to form the bent pipe 100, and a requirement that a flatness ratio should not exceed 15% is considered, which helps in simplifying a processing technology involved.

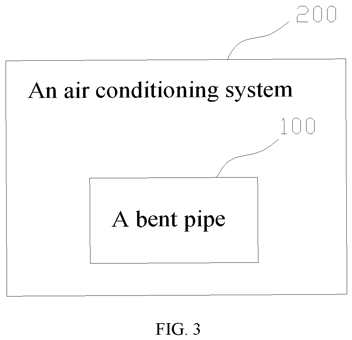

Referring to FIG. 3, the present invention further provides an air conditioning system 200 including the above bent pipe 100 for the air conditioning system provided. By providing the bent pipe 100 in the air conditioning system 200, a cooling efficiency and a heating efficiency of the air conditioning system is ensured, and a safety performance of the air conditioning system is improved.

In addition, it should be noted that the words "first" and "second" are used to define parts only for the convenience of distinguishing the corresponding parts. Unless otherwise stated, the above words have no special meaning, so they cannot be understood as limiting the protection scope of this application.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

One of ordinary skill in the art should recognize that the above embodiments are used only to illustrate the present invention and are not used to limit the present invention, and that appropriate variations and improvements to the above embodiments fall within the protection scope of the present invention so long as they are made without departing from the substantial spirit of the present invention.

**Claims**

1. A bent pipe for an air conditioning system, wherein an outer diameter of the bent pipe is defined as $D$, and a thickness of a wall of the bent pipe is defined as $T$; a bending radius of a bending part of the bent pipe is defined as $R$;

   wherein the outer diameter $D$ of the bent pipe, the thickness $T$ of the wall of the bent pipe and the bending radius $R$ of the bending part of the bent pipe satisfy the following formula: $T/D \geq 0.03$ and $R/D \geq 1.2$.

2. The bent pipe for the air conditioning system of claim 1, wherein a ratio of the thickness $T$ of the wall of the bent pipe to the outer diameter $D$ of the bent pipe is in a range of 0.03 to 0.15.

3. The bent pipe for the air conditioning system of claim 1, wherein a ratio of the bending radius $R$ of the bending part of the bent pipe to the outer diameter $D$ of the bent pipe is in a range of 1.2 to 4.

4. The bent pipe for the air conditioning system of claim 1, wherein the bending radius R of the bending part of the bent pipe is in a range of 2 cm to 10 cm.

5. The bent pipe for the air conditioning system of claim 1, wherein the bending radius $R$ of the bending part of the bent pipe is in a range of 5 mm to 120 mm.

6. The bent pipe for the air conditioning system of claim 1, wherein the thickness $T$ of the wall of the bent pipe is in a range of 0.2 mm to 2.5 mm.

7. The bent pipe for the air conditioning system of claim 1, wherein the thickness $T$ of the wall of the bent pipe is in a range of 0.4 mm to 2 mm.

8. The bent pipe for the air conditioning system of claim 1, wherein the outer diameter $D$ of the bent pipe is in a range of 5 mm to 60 mm.

9. The bent pipe for the air conditioning system of claim 1, wherein a material of the bent pipe is stainless.

10. The bent pipe for the air conditioning system of claim 1, wherein the bent pipe comprises a bending section and a diameter expanding section, wherein the diameter expanding sections are arranged at two ends of the bending section, respectively; and an outer diameter of the diameter expanding section is less than or equal to 1.6 times the outer diameter $D$ of the bent pipe.

11. The bent pipe for the air conditioning system of claim 10, wherein the bent pipe further comprises a connecting pipe section and the diameter expanding section is arranged between the bending section and the connecting pipe section.

12. The bent pipe for the air conditioning system of claim 11, wherein an included angle between the diameter expanding section and an axis of the connecting pipe section is less than or equal to 70 degrees.

13. An air conditioning system, comprising the bent pipe for the air conditioning system of any one of claims 1 to 12.

FIG. 1

FIG. 2

200

An air conditioning system

100

A bent pipe

FIG. 3

## INTERNATIONAL SEARCH REPORT

| International application No. |
|---|
| **PCT/CN2022/122138** |

**A. CLASSIFICATION OF SUBJECT MATTER**

F28F 1/00(2006.01)i; F28F 21/08(2006.01)i; F24F 13/00(2006.01)i

According to International Patent Classification (IPC) or to both national classification and IPC

**B. FIELDS SEARCHED**

Minimum documentation searched (classification system followed by classification symbols)

B28F; B24F

Documentation searched other than minimum documentation to the extent that such documents are included in the fields searched

Electronic data base consulted during the international search (name of data base and, where practicable, search terms used)

CNPAT, CNKI, WPI, EPODOC: 浙江盾安人工环境股份有限公司, 厚, 薄, 外径, 半径, 扁平, 平滑, tThick????, thin????, diameter, radius, flat????, crack???, snap

**C. DOCUMENTS CONSIDERED TO BE RELEVANT**

| Category* | Citation of document, with indication, where appropriate, of the relevant passages | Relevant to claim No. |
|---|---|---|
| PX | CN 216114610 U (ZHEJIANG DUNAN HETIAN METALS CO., LTD.) 22 March 2022 (2022-03-22)<br>claims 1-10, description, specific embodiments, and figure 1 | 1-13 |
| X | CN 202546104 U (HEBEI YADU PIPELINE EQUIPMENT GROUP CO., LTD.) 21 November 2012 (2012-11-21)<br>description, specific embodiments, and figures 1-5 | 1-9, 13 |
| Y | CN 202546104 U (HEBEI YADU PIPELINE EQUIPMENT GROUP CO., LTD.) 21 November 2012 (2012-11-21)<br>description, specific embodiments, and figures 1-5 | 10-12 |
| Y | CN 206929938 U (WANG SHUCHUN) 26 January 2018 (2018-01-26)<br>description, embodiment 1, and figures 1-3 | 10-12 |
| A | CN 103672272 A (BEIJING SHOUHONGGANG HEAVY EQUIPMENT TECHNOLOGY CO., LTD.) 26 March 2014 (2014-03-26)<br>entire document | 1-13 |
| A | CN 203132223 U (GUANGDONG MIDEA ELECTRICAL APPLIANCE CO., LTD. et al.) 14 August 2013 (2013-08-14)<br>entire document | 1-13 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2022** | **22 December 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/122138** |

| C. | DOCUMENTS CONSIDERED TO BE RELEVANT | | |
| --- | --- | --- | --- |
| Category* | Citation of document, with indication, where appropriate, of the relevant passages | | Relevant to claim No. |
| A | CN 207500643 U (ZHUHAI GREE ELECTRIC APPLIANCES INC.) 15 June 2018 (2018-06-15)<br>    entire document | | 1-13 |
| A | US 2004253058 A1 (CONOCOPHILLIPS COMPANY) 16 December 2004 (2004-12-16)<br>    entire document | | 1-13 |

Form PCT/ISA/210 (second sheet) (January 2015)

INTERNATIONAL SEARCH REPORT
Information on patent family members

International application No.

**PCT/CN2022/122138**

| Patent document cited in search report | | | Publication date (day/month/year) | Patent family member(s) | | | Publication date (day/month/year) |
|---|---|---|---|---|---|---|---|
| CN | 216114610 | U | 22 March 2022 | None | | | |
| CN | 202546104 | U | 21 November 2012 | None | | | |
| CN | 206929938 | U | 26 January 2018 | None | | | |
| CN | 103672272 | A | 26 March 2014 | None | | | |
| CN | 203132223 | U | 14 August 2013 | None | | | |
| CN | 207500643 | U | 15 June 2018 | CN | 207500643 | U | 15 June 2018 |
| US | 2004253058 | A1 | 16 December 2004 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202122614353